(19) Europäisches Patentamt
European Patent Office
Office européen des brevets

(11) **EP 1 768 834 B1**

(12) **EUROPEAN PATENT SPECIFICATION**

(45) Date of publication and mention of the grant of the patent:
**31.10.2007 Bulletin 2007/44**

(21) Application number: **05773471.7**

(22) Date of filing: **21.07.2005**

(51) Int Cl.:
*B29D 11/00* $^{(2006.01)}$   *B29C 31/00* $^{(2006.01)}$

(86) International application number:
**PCT/US2005/025979**

(87) International publication number:
**WO 2006/012478 (02.02.2006 Gazette 2006/05)**

(54) **PREDICTIVE METHOD OF ASSIGNING POWER TO AN OPHTHALMIC LENS OR LENS LOT**

PRÄDIKTIVES VERFAHREN ZUR STROMZUWEISUNG FÜR EINE OPHTHALMISCHE LINSE ODER EIN LINSENTEIL

PROCEDE DE PREDICTION D'ATTRIBUTION DE PUISSANCE DE LENTILLE OU D'UN LOT DE LENTILLES OPHTALMIQUES

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.07.2004 US 896710**

(43) Date of publication of application:
**04.04.2007 Bulletin 2007/14**

(73) Proprietor: **BAUSCH & LOMB INCORPORATED Rochester,**
**New York 14604-2701 (US)**

(72) Inventors:
• **BOLAND, Brendan**
  **Waterford (IE)**
• **FOX, Paul**
  **Waterford (IE)**
• **GIALLOMBARDO, John, D.**
  **Rochester, NY 14625 (US)**

(74) Representative: **Maiwald, Walter**
**Maiwald Patentanwalts GmbH**
**Elisenhof**
**Elisenstrasse 3**
**80335 München (DE)**

(56) References cited:
**US-A- 4 681 295**       **US-A- 5 122 314**
**US-A- 5 244 371**       **US-B1- 6 305 661**

**Description**

Background of the Invention

The present invention relates to molding ophthalmic lenses such as contact lenses. More particularly, the present invention relates to a method of accurately predicting the refractive power of a lens molded from a lens mold pair which has undergone storage with a corresponding change in optical surface dimensions. US-B1-6 305 661 discloses molding molds for lens manufacture.

In the field of ophthalmic lens manufacture, and particularly in contact lens manufacture, a required step following fabrication of the lens is to label the refractive power of the lens for sale. Contact lenses are offered for sale in a range of corrective powers to compensate for the patient's myopia (nearsightedness) or hypermetropia (farsightedness). The power of the lens is normally given in units of diopters, typically in 0.25 diopter increments. Instruments used to directly measure the power of the lens are known as may be seen in the following patents:

U.S. Pat. No. 3,985,445 issued Oct. 12, 1976 to Essilor International
U.S. Pat. No. 4,283,139 issued Aug. 11, 1981 to American Optical Corporation
U.S. Pat. No. 5,175,594 issued Dec. 29. 1992 to Allergan Humphery
U.S. Pat. No. 5,123,735 issued Jun. 23, 1992 to Bausch & Lomb Incorporated
U.S. Pat. No. 5,432,596 issued Jul. 11, 1995 to Nidek Co.

As the foregoing patents show, a common method of measuring and assigning the refractive power of a lens involves direct measurement of the lens itself. Challenges in directly measuring the lens are particularly seen when the contact lens is made from a hydrophilic material such as a hydrogel. When in the hydrated state, the lens is flexible and difficult to handle which many times translates into power measurement errors.

Another known method of determining the power of a lens that a particular mold pair will make is to measure the radius of the mold optical surface which translates into the radius of the lens made from the mold. For molds made of materials that shrink over time (e.g., polypropylene), one problem with this method is that the measurement of the mold must be done at least twice; once when the mold first comes off the injection mold machine or a short time thereafter (e.g., after 30 minutes), and again when it is time to actually cast the lens (e.g., 48 or more hours later). This is because the mold undergoes dimensional changes while in storage and the radius of the optical surface will change over time. A further disadvantage is that at times the mold pair pulled from storage does not, when measured, have the needed radii to make a lens of the desired power. This pull and measure process must then be repeated until the mold pair having the correct radii of curvature are found. This, of course, is time consuming and adds expense to the manufacturing process.

While the above processes for determining and labeling a lens with the correct power has been used successfully, in cases where process variation may require the process to be repeated, a more efficient and cost-efficient method is needed to determine and assign lens in a manufacturing setting.

Summary of the Invention

The present invention addresses the above need by, in a first aspect, providing a method of predicting the power of a lens made from a particular mold pair held in storage according to claim 1. As such, direct measurement of the lens or mold prior to the casting operation is not necessary as was done in previous methods. The predicted power of the lens may then be used to label the lens. In another aspect, the present invention provides a method for quickly locating and pulling from storage the mold parts needed to manufacture lenses of a particular power without needing to directly measure the mold parts prior to casting a lens therein, according to claim 1.

A presently common method of manufacturing contact lenses is cast molding using female and male mold parts. The female mold has a concave optical surface and the male mold has a convex optical surface. Liquid lens material is dispensed in the female concave surface and the male mold is seated thereon. The facing female and male mold surfaces together define a mold cavity in which the contact lens material is cured (e.g., by heat and/or UV radiation) and formed into a lens. The mold parts themselves are typically made by injection molding and are used only once to make a lens. They may be made of any rigid plastic material, with polypropylene (PP) and polyvinylchloride (PVC) being common materials from which contact lens molds are formed.

In the injection mold machine which forms the mold parts, a female metal tool insert having a precise convex optical surface forms the female optical surface of the female mold part. Likewise, a male metal tool insert having a precise concave optical surface forms the male optical surface of the male mold part. The optical surfaces of the female and male mold parts form the optical surfaces of the respective female (anterior-convex) and male (posterior-concave) surfaces of the lens and must therefore be precisely formed. The optical surfaces of the metal tool inserts are typically machined with a diamond turned lathe and polished to achieve their precise optical surface.

It will thus be appreciated that the shape (radii) and relationship between the optical front curve of a contact lens, as formed by the optical radius of the female mold, and the optical base curve of the contact lens, as formed by the optical radius of the male mold, determines the contact lens refractive power. The present inventors recognized that the future radii of the molds, and thus the power of the lens made thereby, may be accurately predicted by measuring the radii of the molds when they first come off the injection mold machine (or a short time thereafter), utilizing a regression model to predict the shrinkage rate and radii that a particular mold pair will have after a period of time (hereinafter the "mold shrinkage regression model"), and utilizing another regression model to calculate the expected power of a lens made by that mold pair (hereinafter the "predictive power regression model"). The mold parts are thus measured only once after they have been injection molded and prior to their entering storage. The shrinkage regression model will predict the dimensions of the mold pair as a function of time. It is therefore possible to determine the dimensions of the mold pair at any given point in time. This, in turn, allows a manufacturing system wherein a mold pair having the needed dimensions for a particular lens power to be molded may be easily identified and pulled from storage. This eliminates the necessity of having to measure the mold surface immediately prior to the casting operation as was done in prior practice. This method of lens power assignment also removes the need to directly handle the lens to measure the lens power. Based on process robustness, the option still exits at this stage to confirm that the correct power has been met by measuring a sample of lenses. This greatly reduces manufacturing time and costs and makes the lens power assignment operation more reliable.

The above concept of power assignment based on mold radii also applies to lens processes using molds whose dimensions do not meaningfully change over time (e.g., PVC) where again a single mold measurement is sufficient for power assignment.

Brief Description of the Drawing

Figure 1 is an elevational view of an exemplary mold pair prior to assembly used to make a contact lens;
Figure 2 is the view of Fig. 1 showing the mold pair in their assembled form;
Figure 3 is a side elevational view of a contact lens cast in the mold assembly of Figs. 1 and 2; and
Figure 4 is a flow diagram showing basic steps of an embodiment of the inventive method.

Detailed Description

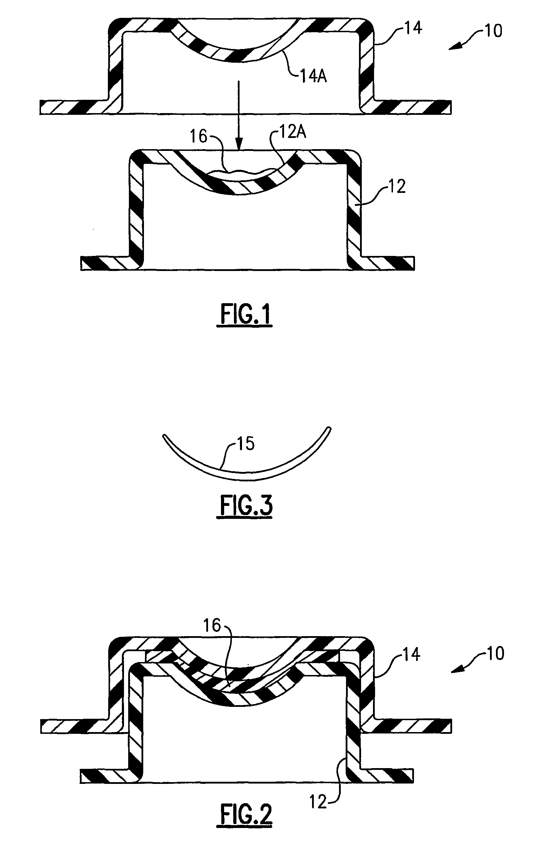

Referring now to the drawing, there is seen in Figures 1-3 an exemplary contact lens mold 10 for making a contact lens 15. Mold 10 includes a female or anterior mold part 12 having concave optical surface 12A and male or posterior mold part 14 having convex optical surface 14A. To cast a lens 15, liquid lens material 16 is dispensed into anterior concave optical surface 12A and posterior convex optical surface 14A is seated thereon. The mold assembly is subjected to a curing cycle to form the lens 15.

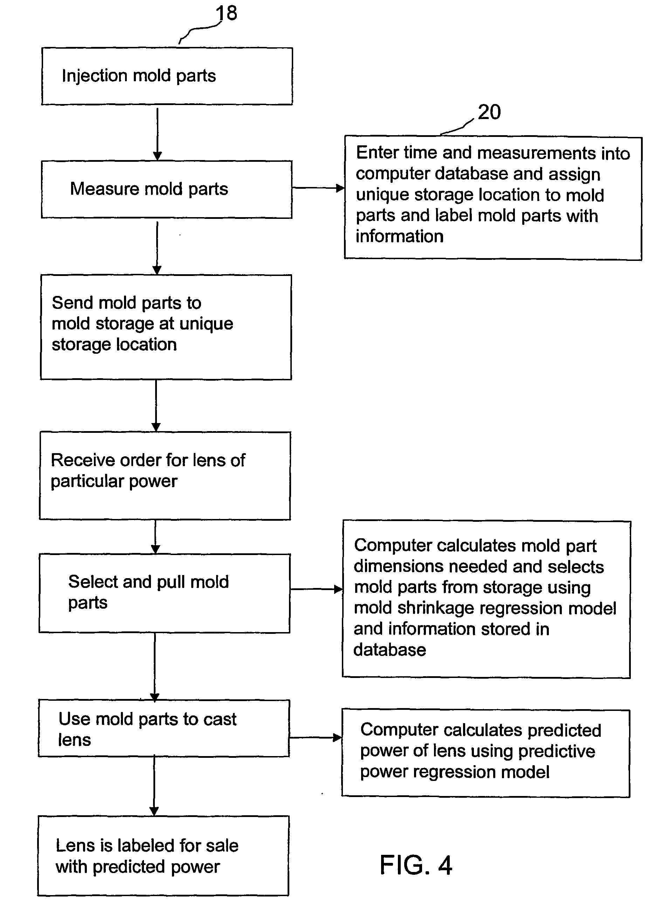

In a first aspect, the invention comprises a method of predicting the power of lens 15 by first measuring one or more dimensions (e.g., radius and outside diameter offset for the anterior mold part, and radius offset, cylinder offset and inside diameter offset for the posterior mold part) of mold optical surfaces 12A, 14A at the time the mold parts are made and prior to their entering storage. More particularly, as seen in the simplified flow diagram of Fig. 4, the lens manufacturing process begins with injection molding of the female and male mold parts 12, 14 at injection mold machine station 18. Once the mold parts 12, 14 are made, their respective optical surfaces 12A, 14A are measured and input into a database of a computer 20. It is noted that all or just a sample of mold parts need to be measured depending on the robustness of the injection molding process. In a robust system, only a sample of mold parts from a particular run off a particular injection mold cavity need be measured and it will be assumed that all mold parts in that run are of the same dimensions. Once measured, the mold parts may be assembled into easy to handle groups or bundles and labeled with a human or machine readable code (e.g., bar code or data matrix code) that indicates the time measured and the measurement data of that particular mold run. At this time, the mold part or mold bundles may be sent to storage. The computer also preferably assigns a unique storage location to the mold part or bundle and includes that information in the database and label. Since the computer knows the mold part dimension, the time the measurements were made, and the storage location of the mold parts, the computer will later be able to quickly locate the required mold parts or mold bundles when needed as explained further below.

A mold shrinkage regression model is developed and input into the computer 20 which is used to compute the predicted dimensions of the mold parts given the time they have been in storage. As explained above, the time the mold parts went into storage is input into the computer database and is labeled on the mold part or mold bundle. The computer therefore knows how long particular mold parts or mold bundles have been in storage as well as their respective storage locations.

The mold shrinkage regression model is developed using previously determined actual mold shrinkage data and readily available regression software such as MICROTAB by Microtab, Inc. or EXCEL by Microsoft Corporation. Once the shrinkage regression model is developed and input into the computer, the change in mold surface dimensions, and hence the mold dimensions over time, may be calculated.

When a lens of a particular power is to be manufactured, the computer searches for a mold part or mold bundle in storage that has the correct dimensions to make a lens of that particular power. More specifically, the computer searches its database for the mold parts in storage having the dimensions, as predicted by the storage time and mold shrinkage regression model, that will make the lens of the needed power. Since the computer database and label on the mold part or bundle includes the initial mold dimensions, the time of measurement, and the location in storage of the mold dimensions it is looking for, the computer locates the required mold parts or mold bundles in storage. A mold pick unit may be utilized to physically pull these mold parts from storage. It is preferred that the mold storage and pick system operate on a first-in/first-out basis so that the oldest molds in inventory are used first. Once these mold parts are pulled from storage, the computer searches for the mating mold parts that, when assembled with the first selected mold parts (both an anterior and a posterior mold part are needed), will form a lens of the intended power. Once the mold parts have been identified, the computer utilizes a power regression model to calculate the predicted power of a lens cast with these mold parts.

The following provides an example of how the power regression model may be developed and utilized:
Method to Apply Regression Analysis to Develop a Power by Mold Radius Model

1. Establish relationship with actual data (this data is for example only).

| Avg. Meas Pwr | Ant Mold Rad | Post Mold Rad | 1 /Ant Rad | 1/ Pos Rad |
|---|---|---|---|---|
| -0.24 | 6.504 | 7.503 | 0.15375 | 0.13328 |
| -1.01 | 6.402 | 7.451 | 0.15620 | 0.13421 |
| -1.98 | 6.299 | 7.402 | 0.15876 | 0.13510 |
| -3.01 | 6.201 | 7.348 | 0.16126 | 0.13609 |
| -4.00 | 6.098 | 7.299 | 0.16399 | 0.13701 |
| -5.01 | 6.002 | 7.252 | 0.16661 | 0.13789 |

SUMMARY OUTPUT

| Regression Statistics | |
|---|---|
| Multiple R | 0.9995 |
| R Square | 0.9990 |
| Adjusted R Square | 0.9984 |
| Standard Error | 0.0724 |
| Observations | 6 |

| ANOVA | df | SS | MS | F | Significance F | |
|---|---|---|---|---|---|---|
| Regression | 2 | 16.38 | 8.19 | 1560.82 | 2.97E-05 | |
| Residual | 3 | 0.02 | 0.01 | | | |
| Total | 5 | 16.40 | | | | |

| | Coefficients | Standard Error | t Stat | P-value | Lower 95% | Upper 95% |
|---|---|---|---|---|---|---|
| Intercept | 43.48056 | 57.9816 | 0.7499 | 0.5078 | -141.0429 | 228.0040 |
| 1 / Ant Rad | -440.48291 | 267.3483 | -1.6476 | 0.1980 | -1291.3053 | 410.3395 |
| 1 / Pos Rad | 180.66124 | 743.0821 | 0.2431 | 0.8236 | -2184.1600 | 2545.4825 |

2. Model:

$$Y \text{ (Pred Pwr)} = \text{Intercept} + \text{1/Ant Rad Coeff} \times \text{(1/Ant Rad)} + \text{1/Pos Rad Coeff} \times \text{(1/Pos Rad)}$$

3. Determine Appropriate Radii to Predict Powers to the nearest 0.25D

| Target Power | Ant Rad Nom | Pos Rad Nom | Pred Power |
|---|---|---|---|
| -0.25 | 6.497 | 7.505 | -0.25 |
| -1.25 | 6.387 | 7.455 | -1.25 |
| -2.25 | 6.280 | 7.400 | -2.25 |
| -3.00 | 6.199 | 7.350 | -3.00 |
| -4.00 | 6.096 | 7.290 | -4.00 |
| -5.00 | 6.004 | 7.260 | -5.00 |

Using the above table, to obtain a target -0.25D, molds would be manufactured to the following nominals:
a) Ant Nom = 6.497
b) Pos Nom = 7.505
The above applies for any desired SKU within the range of Powers used.

The lens and/or its package may then be labeled with this predicted power for sale without having to be directly measured. Based on process robustness the option is available to select a sample for lens measurement to ensure the correct power has been achieved.

**Claims**

1.  A method of manufacturing an ophthalmic lens of a predetermined power comprising the steps of:

    a) molding anterior mold parts (12) and posterior mold parts (14) which together may be used to cast said ophthalmic lens;
    b) measuring one or more dimensions of said anterior mold part and said posterior mold part;
    c) placing said mold parts in storage;
    d) calculating the change in dimension of the mold parts while in storage;
    e) selecting the mold parts from storage which have the dimensions, as calculated in step (d), required to manufacture the predetermined power of the ophthalmic lens.

2.  The method of claim 1 and further comprising the step of calculating the predicted power of the lens based on the change in dimension of the mold parts while in storage.

3.  The method of claim 1 wherein the change in dimension of the mold parts while in storage is calculated using a mold shrinkage regression model.

4.  The method of claim 2 wherein the predicted power is calculated using a predictive power regression model.

5.  The method of claim 1 and further comprising the step of labeling the mold parts with their measured dimensions and time the measurements were taken prior to entering storage.

6.  The method of claim 5 and further comprising assigning a unique storage location to said mold parts prior to their entering storage.

7.  The method of claim 6 wherein the change in dimension of the mold parts while in storage is calculated using a mold shrinkage regression model and a computer is utilized having a database wherein mold part information comprising the mold part measurement dimension, the mold part measurement time, the mold shrinkage regression model, and the mold part unique storage location is entered.

**8.** The method of claim 7 wherein the computer generates a label having said mold part information thereon and said label is affixed to the respective mold parts prior to entering storage.

**9.** The method of claim 8 wherein a computer is utilized to select the mold parts from storage having the required change in dimension to manufacture the lens of the predetermined power.

**Patentansprüche**

**1.** Ein Verfahren zur Herstellung einer ophthalmischen Linse mit vorher festgelegter Stärke, umfassend folgende Schritte:

a) Formen vorderer Formelemente (12) und hinterer Formelemente (14), die zusammen zum Gießen besagter ophthalmischer Linse verwendet werden können;
b) Messen einer oder mehrerer Dimensionen des besagten vorderen Formelements und des besagten hinteren Formelements;
c) Einlagern besagter Formelemente;
d) Berechnung der Dimensionsänderung der Formelemente während der Lagerung;
e) Auswählen derjenigen Formelemente aus dem Lager, die solche, gemäß Schritt (d) berechnete Dimensionen haben, die erforderlich sind, um die ophthalmische Linse mit vorher festgelegter Stärke herzustellen.

**2.** Das Verfahren gemäß Anspruch 1, weiter umfassend den Schritt der Berechnung der vorher festgelegten Stärke der Linse basierend auf der Dimensionsänderung der Formelemente während der Lagerung.

**3.** Das Verfahren gemäß Anspruch 1, wobei die Dimensionsänderung der Formteile während der Lagerung unter Verwendung eines Formschrumpfungs-Regressionsmodells berechnet wird.

**4.** Das Verfahren gemäß Anspruch 2, wobei die vorhergesagte Stärke unter Verwendung eines Stärkeprognose-Regressionsmodells berechnet wird.

**5.** Das Verfahren gemäß Anspruch 1, weiter umfassend den Schritt der Kennzeichnung der Formelemente vor der Einlagerung mit ihren gemessenen Dimensionen sowie der Zeit, zu der die Messungen genommen wurden.

**6.** Das Verfahren gemäß Anspruch 5, weiter umfassend Zuweisung eines eindeutigen Lagerungsortes zu besagten Formelementen vor ihrer Einlagerung.

**7.** Das Verfahren gemäß Anspruch 6, wobei die Dimensionsänderung der Formelemente während der Lagerung unter Verwendung eines Formschrumpfungs-Regressionsmodells berechnet wird und ein Computer genutzt wird, der über eine Datenbank verfügt, in die Formelement-Information eingegeben ist, umfassend die gemessene Dimension des Formelements, die Messzeit des Formelements, das Formschrumpfungs-Regressionsmodell und den eindeutigen Lagerungsort des Formelements.

**8.** Das Verfahren gemäß Anspruch 7, wobei der Computer eine Kennzeichnung erzeugt, die besagte Formelement-Information trägt, und besagte Kennzeichnung auf den entsprechenden Formelementen vor der Einlagerung befestigt wird.

**9.** Das Verfahren gemäß Anspruch 8, wobei ein Computer genutzt wird, um diejenigen Formelemente aus dem Lager auszuwählen, die die erforderliche Dimensionsänderung aufweisen, um die Linse mit der vorher festgelegten Stärke herzustellen.

**Revendications**

**1.** Procédé de fabrication d'une lentille ophtalmique d'une puissance prédéterminée comprenant les étapes consistant à :

a) mouler les pièces de moulage antérieures (12) et les pièces de moulage postérieures (14), qui, ensemble, peuvent être utilisées pour couler ladite lentille ophtalmique ;

b) mesurer une ou plusieurs dimensions de ladite pièce de moulage antérieure et de ladite pièce de moulage postérieure ;

c) placer lesdites pièces de moulage en réserve;

d) calculer le changement de dimension des pièces de moulage pendant leur stockage ;

e) sélectionner les pièces de moulage dans la réserve qui ont les dimensions, telles que calculées dans l'étape d), requises pour obtenir la puissance prédéterminée de la lentille ophtalmique.

**2.** Procédé selon la revendication 1 et comprenant en outre l'étape consistant à calculer la puissance prédite de la lentille en se basant sur le changement de dimension des parties de moulage pendant le stockage.

**3.** Procédé selon la revendication 1, dans lequel le changement de dimension des pièces de moulage pendant le stockage est calculé à l'aide d'un modèle de régression de retrait au moulage.

**4.** Procédé selon la revendication 2, dans lequel la puissance prédite est calculée à l'aide d'un modèle de prévision de régression de puissance.

**5.** Procédé selon la revendication 1 et comprenant en outre l'étape consistant à marquer les pièces de moulage avec leurs dimensions mesurées et l'heure à laquelle les mesures ont été effectuées avant de les placer en réserve.

**6.** Procédé selon la revendication 5 et comprenant en outre l'étape consistant à affecter un emplacement de stockage unique auxdites pièces de moulage avant de les placer en réserve.

**7.** Procédé selon la revendication 6, dans lequel le changement de dimension des pièces de moulage pendant leur stockage est calculé à l'aide d'un modèle de régression de retrait au moulage, et un ordinateur est utilisé, lequel dispose d'une base de données dans laquelle des informations de pièces de moulage, comprenant la dimension de mesure de la pièce de moulage, l'heure de mesure de la pièce de moulage, le modèle de régression de retrait au moulage et l'emplacement de stockage unique de la pièce de moulage, sont stockées.

**8.** Procédé selon la revendication 7, dans lequel l'ordinateur génère une étiquette sur laquelle se trouvent lesdites informations de pièce de moulage, et ladite étiquette est apposée sur les pièces de moulage respectives avant leur stockage.

**9.** Procédé selon la revendication 8, dans lequel un ordinateur est utilisé pour sélectionner les pièces de moulage dans la réserve, lesquelles présentent le changement de dimension requis pour fabriquer la lentille ayant la puissance prédéterminée.

FIG.1

FIG.3

FIG.2

FIG. 4

**REFERENCES CITED IN THE DESCRIPTION**

**Patent documents cited in the description**

- US 6305661 B1
- US 3985445 A
- US 4283139 A
- US 5175594 A
- US 5123735 A
- US 5432596 A